# EUROPEAN PATENT APPLICATION

(11) **EP 1 067 178 A1**
(43) Date of publication of application: **10.01.2001**
(21) Application number: 99500112.0
(22) Date of filing: 06.07.1999
(51) Int. Cl.: C12G 3/02, C12C 5/02

(54) **Formula for the production of beer from ganoderma**

(71) Applicant: Tsai-Wang, Lan, Taichung (TW)
(72) Inventor: Tsai-Wang, Lan, Taichung (TW)
(74) Representative: Perez Bonal, Bernardo

(57) **Abstract**

A formula for the production of a ganoderma beer low in alcohol from an extract of ganoderma mixed in specific proportions with a conventional suspension of beer, that is only partially fermented, but whose taste is then intensified by the addition of a dry powder of the same suspension.

## Description

### OBJECT OF THE INVENTION

This invention of beer of ganoderma belongs to the group of refreshing drinks with therapeutic properties.

A special formula characterises this invention for the production of a beer low in alcohol and rich in ganoderma extract, that comprises three stages, the first is to obtain the suspension for fermenting the beer, the second is the dry pulverisation of the ingredients and the third combines the two previous stages, all under very specific temperature, pressure and proportions of products, and which yields as a result a beer with the therapeutic properties of ganoderma.

### BACKGROUND OF THE INVENTION

*Ganoderma lucidium* is a fungus, from whose carpophor an extract is obtained with bactericide properties and that also stimulates immunity against tumours.

These properties have been taken into account in prior inventions. For example, an anti-microbial agent for staphylococcus infections from an extract of ganoderma has been patented with number 0591603.

In another prior patent, number 053383, a strain of this same fungus is registered capable of producing intensifying stromalysin of anti-tumour immunity.

There is no precedent to the use of these properties of fungus ganoderma out of the pharmaceutical field, such as occurs form example with the known infusions or soft drinks with gin-seng. This is due mainly to its bitter taste, which makes it unpleasant for a large part of the consumers.

However, the present invention gets around this difficulty by combining the respective advantages of the two main components, beer and the extract of ganoderma, in a more complex process than the simple mixing of the two.

The applicant is unaware of the existence of any type of formula for the manufacture of beer of this form and with the stags that are now described.

### DESCRIPTION OF THE INVENTION

The invention object of the present specification relates to a formula for the production of a type of low-alcohol beer and with ganoderma extract, obtained thanks to certain conditions of temperature and pressure, proportions of ingredient and specific processes, that give rise to a beer with a special taste and some added therapeutic effects.

The production of the ganoderma beer is divided basically into three stages, the production of a pre-fermented suspension of the beer of ganoderma, obtaining a dry pulverised powder of the aforementioned suspension and a final processing of the definitive product that includes a combination of the previous products.

The pre-fermented suspension of the beer of ganoderma, is obtained by mixing the following ingredients: malt solution, ganoderma solution and, finally, hops.

The resulting suspension is introduced into a mixing tank with multiple layers and sterilised at 100° C. Afterwards, ice is introduced into the central layer of the tank until the temperature drops to 8-12° C.

Then the suspension is mixed with air, to activate the fermentation by the brewers yeast. When an alcohol concentration of 2.5 % is attained, the temperature is lowered to 2° C and kept at a pressure of 2 kg/cm² for two months, with the fermentation process interrupted. The result is a pre-fermented suspension of beer of ganoderma.

The second stage consists of obtaining a dry pulverised powder of the beer. To do this the pre-fermented suspension of beer is refrigerated under low pressure. In this way the elements of the liquid phase including the alcohol sublimate, leaving as a result a dry pulverised powder that is stored under refrigeration at 0-4° C.

The final processing of the product consists in mixing the dry refrigerated powder of the second stage and the suspension obtained at the end of the first stage, where the powder intensifies the flavour of the suspension without increasing its alcohol concentration.

The yeast is then removed by means of a conventional filtration process of carbon dioxide with the pressurised tank. After this carbon dioxide is once again injected into the suspension to yield conventional head of beer when this is depressurised.

The resulting beer is stored refrigerated and then bottled and sterilised to give the definitive product, which combines the therapeutic advantages of the ganoderma extract with a taste that is close to one that accepted en masse by the consumer, that of beer, in such a way that a market for ganoderma is opened up to a broad spectrum of potential consumers.

### DESCRIPTION OF THE DRAWINGS

To complement the description that is being made and with the aim of facilitating a better understanding and easier comprehension of the characteristics of the invention, the present specification is accompanied, as an integral part thereof, by a set of plans in which, for illustrative purposes and never limiting, the following has been represented:

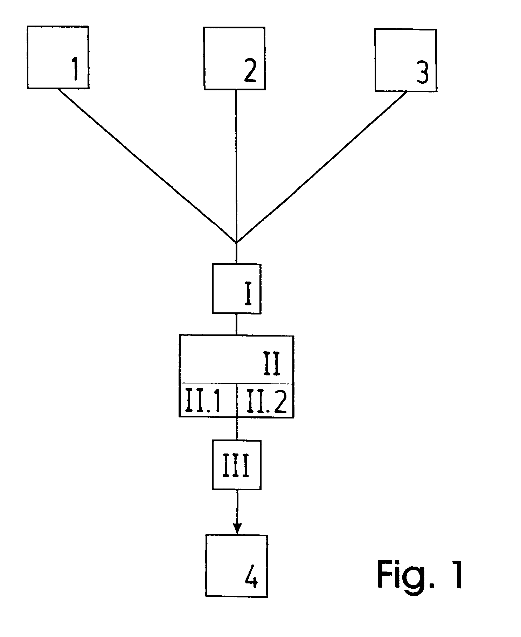

Figure 1 is a flow diagram that represents the process of fermentation of the preliminary suspension of ganoderma beer.

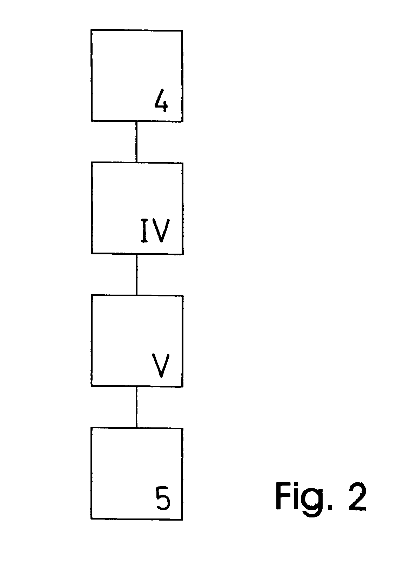

Figure 2 is a flow diagram of the process for obtaining the dry powder of beer.

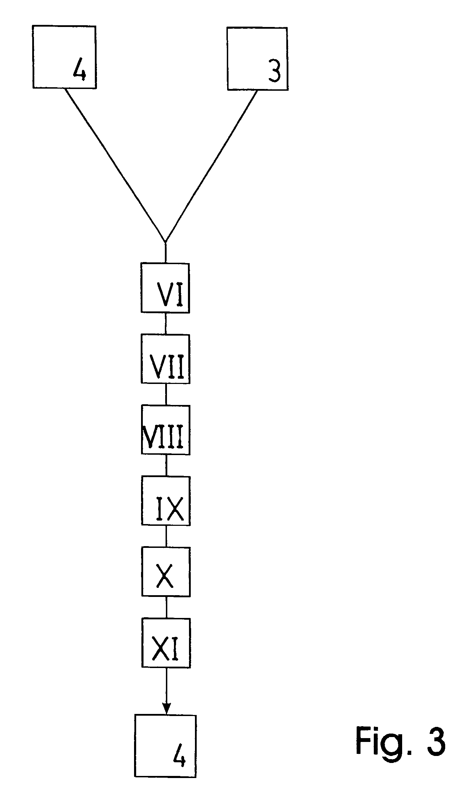

Figure 3 is a flow diagram of the process of combination of the preliminary suspension and the dry beer powder to obtain the final product.

### PREFERABLE EMBODIMENT OF THE INVENTION

The proposed formula for the manufacture of beer of ganoderma, from among those refreshing drinks combined with products of therapeutic properties, is based on three different stages, the production of a pre-fermented suspension (4) of the beer of ganoderma, obtaining a dry powder (5) of the previous suspension and the final processing of the definitive (6) by combination of the two previous products (4) and (5).

In the first of these processes a partial fermentation occurs of a suspension of solution of malt (1), ganoderma extract (2) and hops (3) in proportion of 9 litres of malt solution (1) for every half litre of solution of extract of ganoderma (2) and 0.25 grams per litre of hops (3), previously sterilised (I) at 100° C for an hour and a half or two hours in a multiple layer mixing tank.

After the suspension regains the temperature (II) by cooling (II.1) with ice to 8-12° C, mixing and bringing into contact with air (II.2) for half an hour to activate the fermentation (III) of brewers yeast, that is interrupted (IV) on reaching an alcohol concentration of 2.5 % and an increase in pressure to 2 kg/cm², conditions in which the mixture is stored for five weeks.

The second of the processes is a dry pulverisation of the pre-fermented suspension (4) of beer, that is submitted to a snap refrigeration (V) at 250 mbar of pressure and a temperature of -80° C, to selectively sublimate (VI) the elements that comprised the liquid phase.

This dry powder (5) is stored at 0-4° C until it is used in the third process, where it is combined (VII) in a proportion of 4.5 g for every half litre with the pre-fermented solution (4) from the first stage to intensify its taste without increasing the alcohol content.

Finally the yeast is removed from the beer by conventional filtration of carbon dioxide (VIII) with the pressurised tank. Afterwards, carbon dioxide is once again injected (IX) once again into the suspension to give rise to the type beer head when this is depressurised. The resulting beer (6) is stored for two days at 2° C (X) before proceeding to bottling (XI), at the end of which, the bottle and final product are sterilised at 65° C for five minutes (XII), before sale to the public.

## Claims

1. A formula for the production of beer of ganaderma, from among those soft drinks combined with products of therapeutic properties, essentially characterised by consisting of three stages, the production of a pre-fermented suspension (4) of the beer of ganoderma, obtaining a dry powder (5) of the previous suspension and the final processing of the definitive (6) by combination of the two previous products (4) and (5), whose special conditions of temperature and pressure, proportions of ingredients and specific processes, give rise to a beer with a special taste and some added therapeutic effects.

2. A formula for the production of beer of ganaderma, according to the previous claim, characterised because the first of the processes is a partial fermentation (III) until a low alcohol concentration is reached of a suspension of malt solution (1), extract of ganoderma (2) and hops (3), previously sterilised (I) and which, introduced into a multiple stage mixing tank, reaches its temperature (II) by cooling (II.1) with ice to 8-12° C, the mixture then being brought into contact with air (II.2) for half an hour to active the fermentation (III) by the brewers yeast until, once the desired alcohol concentration is reached, the mixture is cooled and pressurised (IV) to interrupt the fermentation and store the product.

3. A formula for the production of beer of ganoderma according to the previous claims, characterised because the second of the processes is a dry pulverisation of the pre-fermented suspension of beer (4), where said solution (4) is submitted to a snap refrigeration at low temperature and pressure, to selectively sublimate (VI) the elements that comprise the liquid phase, and where the resulting dry powder (5) may be stored at 0-4° C.

4. A formula for the production of beer of ganoderma according to the previous claims, characterised because the third of the processes consists of a combination of the products resulting from the two previous processes, where the dry powder (4) is added (VII) to the pre-fermented (5) solution to intensify its taste without increasing its alcohol content, after which the brewers yeast is removed by conventional filtration of carbon dioxide (VIII) with the pressurised tank, dioxide that is then injected (XI) into the suspension to give rise to a beer head when this is depressurised, where, after injection of carbon dioxide (IX) it is temporally stored at 2° C (X) before proceeding to bottling (XI), at the end of which, the bottle and product is sterilised at 65° C for five minutes (XII), before sale to the general public.
